# EUROPEAN PATENT APPLICATION

(11) **EP 3 886 294 A1**
(43) Date of publication of application: **29.09.2021**
(21) Application number: 20164905.0
(22) Date of filing: 23.03.2020
(51) Int. Cl.: H02K 1/18, H02K 9/06, H02K 11/33

(54) **ELECTRIC MACHINE, ELECTRIC CIRCUIT BOARD ARRANGEMENT, AND METHOD OF ASSEMBLING AN ELECTRIC MACHINE**

(71) Applicant: ABB Schweiz AG, 5400 Baden (CH)
(72) Inventor: Ikäheimo, Jouni, 65320 Vaasa (FI)
(74) Representative: Kolster Oy Ab

(57) **Abstract**

An electric machine (10) comprises a stator (100) and an electric circuit board (104), which has an electric component arrangement (106) configured to drive the electric machine (10), are attached together with stator teeth (112) of the stator (100), the stator teeth (112) extending through the electric circuit board (104) for the attachment. A rotor (102) of the electric machine (10) locates at least partly on a same side of the electric circuit board (104) as and in vicinity of the electric component arrangement (106).

## Description

### Field

The invention relates to an electric machine, an electric circuit board arrangement, and a method of organizing electric machine, electric circuit board and electric component arrangement.

### Background

Heat, ventilation and air conditioning (HVAC) segment uses compact fan motors. Nowadays most motors are electronically commutated (EC) motors which are typically permanent magnet motors. Low cost, compact size and simple construction are often preferred in the HVAC applications, although both the cooling by ventilation and the motor make the arrangement large and bulky. Hence, there is a need for an improvement.

### Brief description

The invention is defined by the independent claims. Embodiments are defined in the dependent claims.

### List of drawings

Example embodiments of the present invention are described below, by way of example only, with reference to the accompanying drawings, in which
Figure 1 illustrates an example of an electric circuit board arrangement with an electric machine, printed circuit board and electric component arrangement;
Figures 2 and 3 illustrate examples of a ventilation structure;
Figure 4 illustrates an example of the ventilation structure in the rotor;
Figure 5 illustrates an example of an example of an air guide;
Figure 6 illustrates an example of a multilayer printed board, patterned conductor of which comprises a coil of a stator; and
Figure 7 illustrates of an example of a flow chart of a method of performing cooling.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain features/structures that have not been specifically mentioned. All combinations of the embodiments are considered possible if their combination does not lead to structural or logical contradiction.

It should be noted that while Figures illustrate various embodiments, they are simplified diagrams that only show some structures and/or functional entities. The connections shown in the Figures may refer to logical or physical connections. It is apparent to a person skilled in the art that the described apparatus may also comprise other functions and structures than those described in Figures and text. It should be appreciated that details of some functions, structures, and the signalling used for measurement and/or controlling are irrelevant to the actual invention. Therefore, they need not be discussed in more detail here.

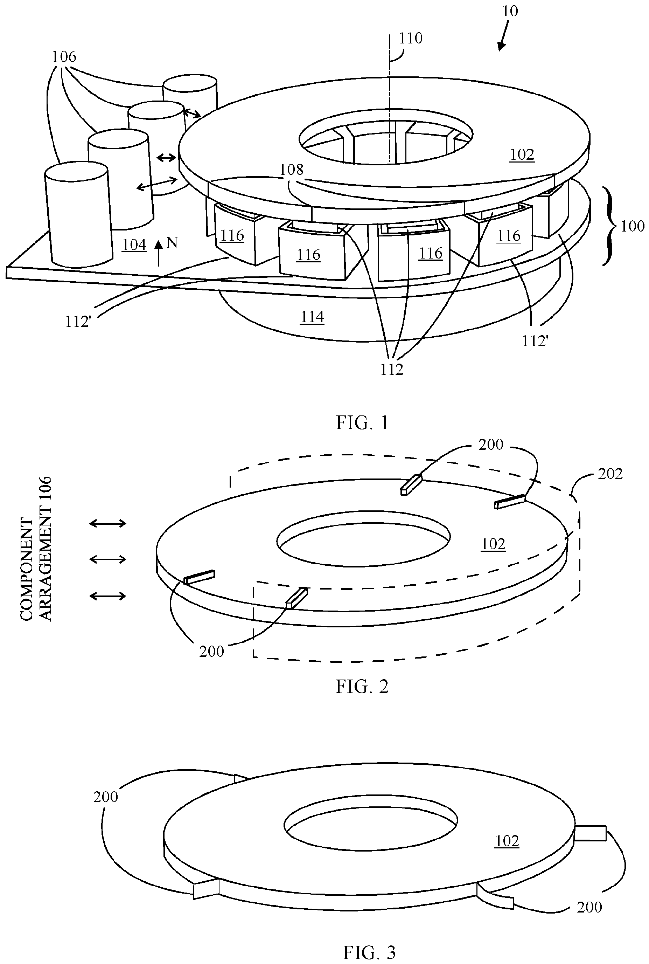

Figure 1 illustrates an example of an electric machine 10 that comprises a stator 100 and a rotor 102. The stator 100 is attached to an electric circuit board 104. The electric circuit board 104 has an electric component arrangement 106, which drives the electric machine 100. The electric machine 10 may be an electric motor or an electric generator, for example. The electric component arrangement 106 may comprise one or more transistors like field effect transistors, one or more capacitors, one or more resistors or the like, for example. The electric component arrangement 106 typically warms up or becomes hot when the electric machine 10 is operating. Without a proper cooling the electric component arrangement 106 may overheat, and fail to drive the electric machine 10 properly or it may fail to drive the electric machine 10 at all.

The rotor 102 locates at least partly on a same side of the electric circuit board 104 as the electric component arrangement 106. The rotor 102 also locates in a direct vicinity of the electric component arrangement 106. The electric component arrangement 106 may be distributed in a full circle or in a sector around the rotor 102.

The rotor 102 comprises a ventilation structure 108, which extends in a radial direction of the rotor 102 to an outer circumference of the electric machine 10 and rotates round a rotation axis 110 of the electric machine 10 with the rotor 102.

The electric machine 10 may perform cooling of the electric component arrangement 106 such that the ventilation structure 108 causes air to flow in a radial direction of the rotor 102 outward or toward the rotation axis 110 of the rotor 102 in response to rotation of the rotor 102.

The ventilation structure 108 causes air to flow in a direction perpendicular to a normal N of the electric circuit board 104 and toward or fromward the electric component arrangement 106 for cooling it.

In an embodiment, the ventilation structure 108 of the rotor 102 is located outside the stator 100. The ventilation structure 108 may be above the stator 100 and/or over the stator 100. The ventilation structure 108 may be round the stator 100 at least partly.

The stator 100 comprises stator teeth 112 that penetrate the electric circuit board 104 for attaching the electric machine 10 to the electric circuit board 104. The stator 100 and the electric circuit board 104 are attached together. The stator teeth 112 extend through the electric circuit board 104. In an embodiment, the attachment may be performed with the stator teeth 112 such that the stator teeth 112 extend through the electric circuit board 104 in order to make a suitably strong attachment. The electric circuit board 104 has holes 112' for the teeth 112. Only some of the teeth 112 and holes 112' have their reference numbers in Figure 1. In an embodiment, the holes 112' and the teeth 112 may have configurations, which correspond to each other and allow the stator 100 to be put only in one or more predefined orientations with respect to the electric circuit board 104 and the electric component arrangement 106. The holes 112' may have a tight fit with the teeth 112 in order to allow a potentially strong attachment between the stator 100 and the electric circuit board 114. After inserting the teeth 112 through the holes 112', a section above the electric circuit board 114 may be bent or twisted in order to fix the attachment. The section above the electric circuit board 114 may also be attached with a counterpart which strengthens the attachment. The counterpart may be a quick connector, for example. The teeth 112 may have a barb or an anchor similar to that of a hook which strengthens the attachment and reduces a possibility of an unintentional release.

Alternatively or additionally, the attachment between the stator 100 and the electric circuit board 104 may be arranged with separate means of attachment such as screws, rivets, glue and/or the like, for example.

The stator teeth 112 may be made of steel, for example. The stator teeth 112 may be attached to a stator support 114, which may locate on an opposite side of the electric circuit board 104 with respect to the rotor 102 and/or the electric component arrangement 106. Coils 116 for an electromagnetic effect that causes the rotor 102 to rotate around the rotation axis 110 may be wound around the teeth 112. The coils 116 may be on the same side of the electric circuit board 104 as the rotor 102 and the electric component arrangement 106. In this manner, the attachment between the stator 100 and the electric circuit board 104 may be strengthened.

In an embodiment, the rotor 102 may locate and rotate over the stator 100. The rotor 102 may comprise a Halbach array of magnets, for example, which allow the rotor 102 to locate over the stator 100.

In an embodiment, the stator support 114 may comprise an iron core, which locates on an opposite side of the electric circuit board 104 to the rotor 102.

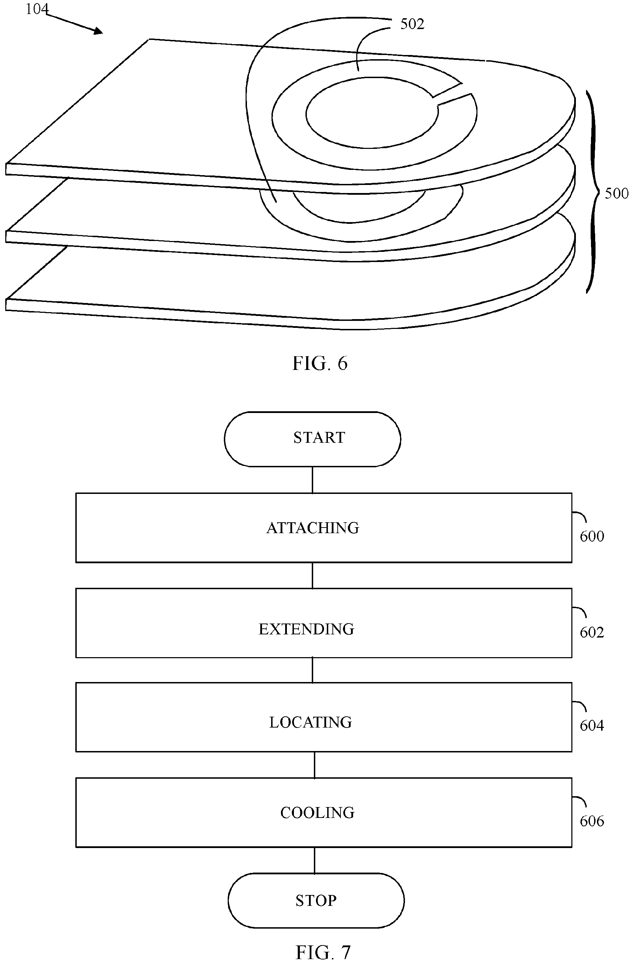

In an embodiment an example of which is illustrated in Figure 6, the electric circuit board 104 may comprise a multilayer circuit board 500. The stator 100 may then comprise a patterned conductor 502 of the multilayer circuit board 500, the patterned conductor 502 on multiple layers of the multilayer circuit board 500 comprising a coil of the stator 100. The patterned conductor 502 of at least two layers of the multilayer circuit board 500 may comprise circular patterns that are almost circles and that resemble the letter C. The circular patterns have a gap between tips/ends like the letter C on the right side. One end of a circular pattern may be electrically connected with an end of a corresponding circular pattern of a layer above through a via, and another end of the circular pattern may be electrically connected with an end of a corresponding circular pattern of a layer below through a via. The circular patterns may be co-centered. In this manner, a coil of the stator 100 may at least partly be formed.

The electric machine 10, the electric component arrangement 106 and the electric circuit board 104 together form an electric circuit board arrangement.

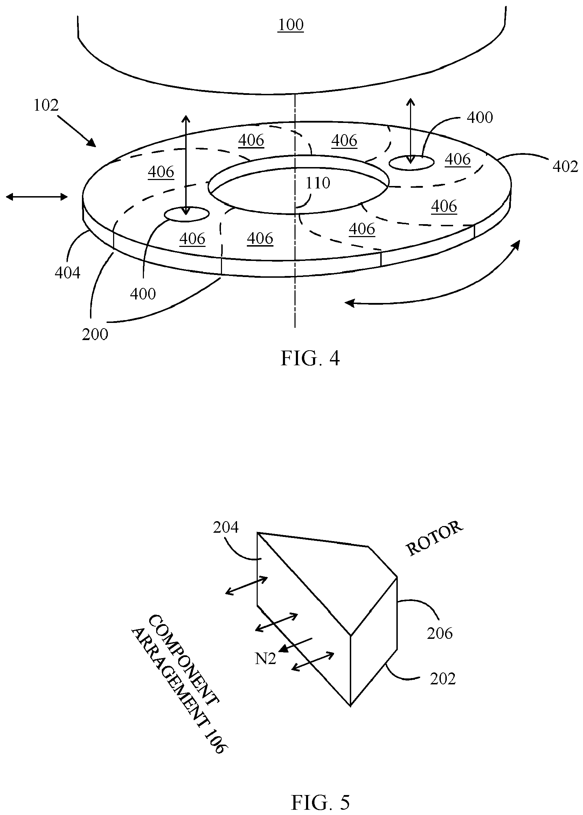

Figure 2 illustrates an example of an embodiment where the ventilation structure 108 comprises at least one blade 200 that extends in a radial direction of the rotor 102 to an outer circumference of the electric machine 10, and rotates round a rotation axis 110 of the electric machine 10 with the rotor 102. The at least one blade 200 may reside on the rotor 102, within the rotor 102 or below the rotor 102. The at least one blade 200 may be straight or curved. Curved blades 200 are shown in Figures 3 and 4. As shown in the exploded view of Figure 4, the blades 200 may be within the rotor 102. In an embodiment, the at least one blade 200 may be a fin or the like, for example.

Figure 2 also illustrates an example of an air guide 202 (dashed line). In this example, the electric machine 10 comprises the air guide 202 that directs the airflow against the electric component arrangement 106. The air guide 202 may comprise a wall, which surrounds the rotor 102 but also has an aperture 204 that points toward the electric component arrangement 106. Hence, the airflow that the rotor 102 with the ventilation structure 108 generates may blow toward or fromward the electric component arrangement 106 (see also Figure 5).

In an embodiment like in Figure 4 although the principle applies also to other embodiments, air may be sucked from between the stator teeth 112 and blown toward the electric component arrangement 106 in vicinity of the rotor 102 by the ventilation structure 108. The at least one blade 200, which may be curved, within the rotor 102 may cause a sucking force that pulls air through at least one hole 400 in the rotor 102 from the stator 100 toward the ventilation structure 108 and the at least one blade 200 then pushes the air outward from the ventilation structure 108, which causes an airflow against the electric component arrangement 106. Alternatively, the curved blades 200 within the rotor 102 may cause a blowing force that makes air to flow through at least one hole in the rotor 102 to the stator 100 fromward the ventilation structure 108, while the at least one blade 200 sucks air from outside causing an airflow against the electric component arrangement 106, a direction of the airflow being from the electric component arrangement 106 toward the rotor 102. In this embodiment, the ventilation structure 108 may comprise plates 402, 404 between which the blades 200 are located. In the ventilation structure 108, between the blades 200 and the plates 402, 404 there may be channels 406 within which air flows. The channels 406 also direct air outwards from the rotor 102 or towards the rotor 102. The blades 200 fixed to the plates 402, 404 may form an impeller that makes air to move from the stator 100 to the rotor 102 and then out of the rotor 102, or from the electric component arrangement 106 first to the rotor 102 and then to the stator 100. In that manner, both the electric machine 10 and the electric component arrangement 106 can be cooled. The air cools when it moves between the electric machine 10 and the electric component arrangement 106.

The electric machine 10 can be considered a printed circuit board type machine which combines the drive electronic components on the same circuit board 104 where the electric machine 10 is. In an embodiment, where the rotor 102 is a Halbach type rotor, a flux return path can be in the stator support 114.

Figure 5 illustrates an example of the air guide 202. The air guide 202 may have walls on a horizontal level and a vertical level such that the air guide 202 is like a tube or a horn a first aperture 204 of which let the air travel through. A normal N2 of the first aperture 204 then points toward the electric component arrangement 106. A second aperture 206 is nearer the rotor 102 and point toward the rotor 102. In this manner, the air guide 202 directs the airflow against the electric component arrangement 106.

It is known that the printed circuit board based stator coils may have a (very) small inductance, which requires higher switching frequencies to be used in the drive to reduce the inrush current to the winding. That may also be true for ironless printed circuit board based stator coils. A different, typically MOSFET type drive electronic circuit arrangement 106 is thus needed. As the MOSFETs have a low conduction loss, they can be integrated directly on the printed circuit board 104, and in this case it will be very same printed circuit board 104 where the stator 100 and its windings i.e. coils 116 are located. Further, as the rotor 102 resides on top of the PCB board 104, its motion can be used to propel coolant (air) toward and/or fromward the drive electronic circuit arrangement 106.

That the drive electronic circuit arrangement 106 and the electric machine 10 on the same electric circuit board 104 in vicinity with each other results in a compact and power dense arrangement where the electric circuit board arrangement can cool itself effectively.

Figure 7 illustrates an example of a flow chart of a method of organizing an electric machine (10), electric component arrangement 106 and an electric circuit board 104. In step 600, a stator 100 and an electric circuit board 104 are attached together, the electric circuit board 104 having an electric component arrangement 106 configured to drive the electric machine 10.

In step 602, stator teeth 112 of the stator 100 are extended through the electric circuit board 104.

In step 604, a rotor 102 of the electric machine 10 is located at least partly on a same side of the electric circuit board 104 as and in vicinity of the electric component arrangement 106.

In step 606, which is performed during the electric machine 10 is operating, an electric component arrangement 106 is cooled by causing an air flow in a radial direction against the electric component arrangement 106 with a ventilation structure 108 of a rotor 102 of the electric machine 10 when the rotor 102 is rotating, the ventilation structure 108 extending in the radial direction to an outer circumference of the electric machine 10 and rotating with the rotor 102.

It will be obvious to a person skilled in the art that, as technology advances, the inventive concept can be implemented in various ways. The invention and its embodiments are not limited to the example embodiments described above but may vary within the scope of the claims.

## Claims

1. An electric machine (10), **characterized in that** the electric machine (10) comprises
a stator (100), an electric circuit board (104), which has an electric component arrangement (106) configured to drive the electric machine (10), and stator teeth (112) of the stator (100), which are configured to extend through the electric circuit board (104); and
a rotor (102) of the electric machine (10) is configured to locate at least partly on a same side of the electric circuit board (104) as and in vicinity of the electric component arrangement (106).

2. The electric machine of claim 1, **characterized in that** the stator (100) comprises an iron core, which is configured to locate on an opposite side of the electric circuit board (104) to the rotor (102).

3. The electric machine of claim 1, **characterized in that** the rotor (102) comprises a ventilation structure (108), which is configured to extend in a radial direction to an outer circumference of the electric machine (10) and rotate round a rotation axis (110) of the electric machine (10) with the rotor (102); and
the electric machine (10) is configured to cool the electric component arrangement (106) such that the ventilation structure (108) is configured to cause air to flow in a radial direction of the rotor (102) in response to rotation of the rotor (102).

4. The electric machine of claim 2, **characterized in that** the ventilation structure (108) of the rotor (102) is located outside the stator (100).

5. The electric machine of claim 1, **characterized in that** the electric machine (10) comprises an air guide (202) configured to direct the airflow against the electric component arrangement (106).

6. The electric machine of claim 1, **characterized in that** the stator (100) and an electric circuit board (104) are attached together with the stator teeth (112) of the stator (100).

7. An electric circuit board arrangement, **characterized in that** the electric circuit board arrangement comprises
an electric circuit board (104);
an electric machine (10) whose stator (100) is attached to an electric board (104);
an electric component arrangement (106), which comprises electric components to drive the electric machine (10), attached to the electric circuit board (104) in vicinity of the electric machine (10) such that stator teeth (112) of the stator (100) are configured to extend through the electric circuit board (104); and
a rotor (102) of the electric machine (10) is configured to locate at least partly on a same side of the electric circuit board (104) as the electric component arrangement (106).

8. The electric circuit board arrangement of claim 7, **characterized in that** the stator (100) comprises an iron core, which is configured to locate on an opposite side of the electric circuit board (104) to the rotor (102).

9. The electric circuit board arrangement of claim 7, **characterized in that** the rotor (102) comprises a ventilation structure (108) configured to extend in a radial direction to an outer circumference of the electric machine (10), and rotate round a rotation axis (110) of the electric machine (10) with the rotor (102); and
the electric machine (10) is configured to cool the electric component arrangement (106) such that the ventilation structure (108) is configured to cause air to flow in the radial direction against the electric component arrangement (106) in response to rotation of the rotor (102).

10. The electric circuit board arrangement of claim 7, **characterized in that** the ventilation structure (108) of the rotor (102) is located outside the stator (100).

11. The electric circuit board arrangement of claim 7, c**haracterized** in that the rotor (102) is configured to locate and rotate over the stator (100).

12. The electric circuit board arrangement of claim 7, **characterized in that** the electric machine (10) comprises an air guide (202) configured to direct the airflow against the electric component arrangement (106).

13. The electric circuit board arrangement of claim 7, **characterized in that** the electric circuitboard (104) comprises a multilayer circuit board (500); and the stator (100) comprises a patterned conductor (502) of the multilayer circuit board (500), the patterned conductor (502) comprising a coil of the stator (100).

14. A method of organizing an electric machine (10), electric component arrangement (106) and an electric circuit board (104), **characterized by**
attaching (600) a stator (100) and an electric circuit board (104) together, the electric circuit board (104) having an electric component arrangement (106) configured to drive the electric machine (10);
extending (602) stator teeth (112) of the stator (100) through the electric circuit board (104); and
locating (604) a rotor (102) of the electric machine (10) at least partly on a same side of the electric circuit board (104) as and in vicinity of the electric component arrangement (106).

15. The method of claim 14, **characterized by** cooling (604) the electric component arrangement (106) by causing an air flow in a radial direction against the electric component arrangement (106) with a ventilation structure (108) of the rotor (102) of the electric machine (10) when the rotor (102) is rotating, the ventilation structure (108) extending in the radial direction to an outer circumference of the electric machine (10) and rotating with the rotor (102).
